# EUROPEAN PATENT APPLICATION

(11) **EP 4 844 970 A1**
(43) Date of publication of application: **25.11.2026**
(21) Application number: 25177898.1
(22) Date of filing: 21.05.2025
(51) Int. Cl.: H02J 1/10, C25B 1/04, C25B 15/02, H02J 1/14, H02J 4/00

(54) **AN ELECTRICALLY OPERABLE FACILITY**

(71) Applicant: Siemens Energy Global GmbH & Co. KG, 81739 München (DE)
(72) Inventor: Czichon, Jens Christian, 59494 Soest (DE); Reimann, Oliver, 91056 Erlangen (DE)

(57) **Abstract**

The invention relates to an electrically operable facility (104, 106) comprising:
- a consumer connection (102),
- an electrical facility connection (18) for connecting to an electrical power supply network (12),
- a transformer (52, 76, 78) having a primary winding (54, 80, 82) electrically coupled to the facility connection,
- an uncontrolled rectifier device (62, 64) having a first AC voltage connection (92, 94) electrically coupled to a first of the secondary windings (56, 58, 84) and a first DC voltage connection (98),
- a controllable rectifier device (66) having a second AC voltage connection (96) electrically coupled to a second of the secondary windings (60, 86) and a second DC voltage connection (100), and
- a DC converter (72) having a rectifier voltage connection electrically coupled the first and second DC voltage connections and electrically coupled to the consumer connection.

## Description

The invention relates to an electrically operable facility with at least one consumer connection for connecting at least one DC consumer, wherein the electrically operable facility is configured to supply the at least one DC consumer with an operating power in normal operation, an electrical facility connection for connecting with an electrical power supply network having a first AC voltage, at least one transformer that has a primary winding electrically coupled to the facility connection, wherein the transformer has at least two secondary windings, at least one controllable rectifier device that has an AC voltage connection electrically coupled to one of the at least two secondary windings and a DC voltage connection for providing the rectifier voltage, in order to provide the operating power. The invention further relates to an electrolyzing plant with a plurality of electrolyzing cells, wherein the electrolyzing plant is configured to supply the electrolyzing cells with an electrolyzing power in normal electrolyzing operation so that the electrolyzing cells realize the desired electrolyzing process. Finally, the invention relates to a method for operating an electrically operable facility that has at least one consumer connection for connecting at least one DC consumer, wherein the electrically operable facility is configured to supply the at least one DC consumer with an operating power in normal operation, wherein the electrically operable facility has an electrical facility connection for connecting with an electrical power supply network having a first AC voltage, wherein at least one transformer of the electrically operable facility has a primary winding electrically coupled to the facility connection, wherein the transformer has at least two secondary windings, wherein at least one controllable rectifier device of the electrically operable facility, which has an AC voltage connection electrically coupled to one of the at least two secondary windings and a DC voltage connection electrically coupled to the consumer connection, provides the rectifier voltage in order to provide the operating power.

Electrically operable facilities, electrolyzing plants, as well as methods of the type mentioned are extensively known in the state of the art so that separate documentary evidence is not required. Electrolyzing plants serve to convert one chemical substance or more chemical substances as the substance to be electrolyzed into one or more other chemical substances, namely, electrolyzing products by use of electricity. For this purpose, the electrolyzing plant has a plurality of electrolyzing cells, with the corresponding electrochemical conversion taking place in each of the electrolyzing cells. To this end, the electrolyzing cells are supplied with an electrical electrolyzing power, in particular with an electrical electrolyzing current or an electrolyzing voltage, in the intended electrolyzing process. As a rule, a chemical reaction, namely, the substance conversion, is established by the electrolyzing current. This is referred to as electrolyzing. A well-known and frequently used form of electrolyzing is water electrolyzing. In water electrolyzing, water is electrolyzed into its components, namely, hydrogen and oxygen, using the electrolyzing current. In principle, however, other substances can also be subjected to electrolyzing, such as carbon dioxide or the like.

Both, the substance to be electrolyzed and the electrolyzing product are usually fluid substances that are supplied to the electrolyzing cells or discharged from the electrolyzing cells via corresponding supply piping. The supply piping is usually connected to a cell supply device or at least partially included in the cell supply device. The cell supply device serves to supply the electrolyzing cells with the respective substances or at least one operating substance for the intended electrolyzing process. "Supply" here means not only charging the operating substance or the substance to be electrolyzed, but also discharging the respective electrolyzing product.

In particular, the provision of hydrogen becomes to be industrially relevant, especially, since hydrogen can be a versatile energy carrier. Hydrogen can be provided with an electrolyzing plant, also called an electrolysis plant, especially using regeneratively generated electrical energy. One possibility for producing hydrogen is to use an electrolyzing plant to carry out electrolyzing of water.

The electrolyzing cells use, for example, proton exchange membranes (PEM). The principle of a PEM-based electrolyzing device or PEM-based electrolyzing cell is known to those skilled in the art, which is why it is refrained from providing further explanations in this disclosure. An electrolyzing cell of the type mentioned above for producing hydrogen and oxygen by electrolyzing of water is disclosed, for example, in DE 10 2011 007 759 A1.

An electrolyzing device of the type mentioned above typically has a plurality of electrolyzing cells that are often electrically connected in series. Depending on the design of the electrolyzing plant and the electrolyzing cells, however, the electrolyzing cells can also be at least partially connected in parallel. At least during electrolyzing operation, the electrolyzing cells are electrically coupled to the power supply network as an electrical energy source via an electrically operable facility of the electrolyzing plant. For the intended electrolyzing process, the electrically operable facility provides a suitable electrical current, namely, the electrolyzing current and the electrolyzing voltage, or the electrolyzing power so that the intended process of electrochemical substance conversion can be realized by the electrolyzing cells as part of the electrolyzing plant.

Frequently, the electrolyzing cells of an electrolyzing plant are also arranged successively in a stack forming a cell stack of the electrolyzing cells. The stacked arrangement makes it possible for the successively arranged electrolyzing cells to be electrically contacted directly so that, for example, an electrical series connection can be easily realized. In addition, separate electrical connections of the electrolyzing cells can be largely reduced or avoided. Finally, a compact mechanically stable structure can also be achieved.

Within a cell stack, a supply piping arrangement with cell connection lines (manifold) or a supply structure of a cell supply device can also be provided, which serves, among other things, to supply the at least one operating substance or the at least one substance to be electrolyzed to the electrolyzing cells and/or to discharge the at least one electrolyzing product from the electrolyzing cell. The cell stack is usually operated with a certain electrolyzing power or with the electrolyzing current in such a way that an electrical current of the cell stack is as small as possible, but, at the same time, an electrical voltage at the cell stack is as large as possible. This is achieved by suitable stacking of the electrolyzing cells in the cell stack. As a result, electrical voltages of the individual electrolyzing cells in the cell stack can add up to a cell stack voltage as the electrolyzing voltage, while the electrolyzing cells connected in series in this way can be operated with a substantially equal electrolyzing current.

A large number of electrolyzing cells can be arranged in the cell stack, for example, more than about 100 electrolyzing cells, in particular, several hundred electrolyzing cells, especially, however, not more than about 400 electrolyzing cells. For example, for electrolyzing of water to produce hydrogen and oxygen, an electrical voltage at each of the electrolyzing cells or the electrolyzing voltage is in a range of about 1.5 V to about 2.5 V. This results in a high electrolyzing voltage for a cell stack of such electrolyzing cells, the cell stack voltage may exceed 100 V, and can even amount to several hundred volts.

The electrolyzing power is provided by means of the electrically operable facility, which, for this purpose, can be connected with respective opposite electrical connections of the cell stack. The electrically operable facility may be coupled or electrically connected with an energy supply network such as the public energy supply network via the system connection.

In addition to the cell stack, the electrolyzing plant can include other components, such as pumps, heat exchangers, separation tanks, which are necessary for the intended electrolyzing process. These components can be provided together by the cell supply device. The electrolyzing plant usually also has a control apparatus that may be configured to control the electrolyzing process, especially, the components of the electrolyzing plant.

In the intended operation of the electrolyzing plant, it occurs regularly that voltage fluctuations of the energy supply network appeared, which need to be compensated in order to keep the conditions for the intended operation of the electrolyzing cells essentially constant, that is, in particular to keep the electrolyzing voltage and the electrolyzing current substantially constant. For this purpose, it is provided that the electrolyzing plant or its electrically operable facility has a transformer and a thyristor rectifier as a controllable rectifier device. The transformer, specifically, its primary winding, is designed to have taps, wherein the primary winding is adjustable under load by a tap changer in order to optimize a stationary operating point of the thyristor rectifier. In cooperation with the thyristor rectifier, a corresponding adjustment can be made in order to achieve the required operating conditions for the electrolyzing cells in the intended operation.

It has been found that the transformer with the tap changer is significantly more expensive compared to a transformer without a tap changer and also requires correspondingly more complex maintenance. At the same time, the use of the thyristor rectifier results in the need for a complex filter circuit and compensation device. This serves, among other things, to reduce or largely avoid network feedback effects on the energy supply network due to the operation of the electrolyzing plant. Overall, this results in high costs not only with regard to installation, but also with regard to the intended operation. Among other things, this affects the overall efficiency of the electrolyzing plant.

The invention is based on the object to find an electrically operable facility, an electrolyzing plant and a method for operating an electrically operable facility in which the effort can be reduced. In addition, the efficiency shall be improved.

As a solution, the invention proposes an electrically operable facility, an electrolyzing plant and a method according to the independent claims.

Exemplary embodiments can be derived from features of the dependent claims.

With regard to an electrically operable facility, the invention especially proposes that the electrically operable facility comprises
- at least one consumer connection for connecting at least one DC consumer, wherein the electrically operable facility is configured to supply the at least one DC consumer with an operating power in normal operation,
- an electrical facility connection for connecting with an electrical power supply network having a first AC voltage,
- at least one transformer that has a primary winding electrically coupled to the electrical facility connection, wherein the transformer has at least two secondary windings,
- at least one uncontrolled rectifier device that has a first AC voltage connection electrically coupled to a first one of the at least two secondary windings and a first DC voltage connection for providing a rectifier voltage,
- at least one controllable rectifier device that has a second AC voltage connection electrically coupled to a second one of the at least two secondary windings and a second DC voltage connection for providing the rectifier voltage, wherein the second DC voltage connection is electrically coupled to the first DC voltage connection in order to provide the operating power, and
- at least one DC converter that has a rectifier voltage connection electrically coupled at least to the first and second DC voltage connections, wherein the at least one DC converter is electrically coupled at least to the at least one consumer connection in order to provide a predetermined operating DC voltage for the at least one DC consumer.

With regard to an electrolyzing plant, the invention especially proposes that the electrolyzing plant has a plurality of electrolyzing cells, wherein the electrolyzing plant is configured to supply the electrolyzing cells with an electrolyzing power in normal electrolyzing operation so that the electrolyzing cells realize the desired electrolyzing process, wherein the electrolyzing plant has an electrically operable facility according to the invention for supplying the electrolyzing cells with the electrolyzing power, wherein at least one consumer connection of the electrically operable facility is electrically coupled to at least a part of the electrolyzing cells in order to provide a predetermined electrolyzing voltage for the electrolyzing cells.

With regard to a method for operating an electrically operable facility, the invention especially proposes that the electrically operable facility has at least one consumer connection for connecting at least one DC consumer, wherein the at least one DC consumer is supplied with an operating power by the electrically operable facility in normal operation, wherein the electrically operable facility has an electrical facility connection for connecting with an electrical power supply network having a first AC voltage, wherein at least one transformer of the electrically operable facility has a primary winding electrically coupled to the facility connection, wherein the transformer has at least two secondary windings, wherein at least one uncontrolled rectifier device of the electrically operable facility, which has a first AC voltage connection electrically coupled to a first one of the at least two secondary windings and a first DC voltage connection, provides a rectifier voltage, and at least one controllable rectifier device of the electrically operable facility, which has a second AC voltage connection electrically coupled to a second one of the at least two secondary windings and a second DC voltage connection, provides the rectifier voltage, wherein the second DC voltage connection is electrically coupled to the first DC voltage connection in order to provide the operating power, and wherein at least one DC converter, which has a rectifier voltage connection electrically coupled at least to the first and second DC voltage connections and is electrically coupled to the at least one consumer connection, provides a predetermined operating DC voltage for the at least one DC consumer.

Among others, the invention is based on the finding that, by using at least one DC converter, an adjustment of specified electrical operating conditions for the at least one DC consumer can be achieved with high efficiency, wherein a complex transformer with a tap changer can be avoided to achieve this goal. The invention allows the use of only a conventional transformer without the need of a tap changer. At the same time, the parallel operation of the uncontrolled rectifier device with the controllable rectifier device makes it possible to significantly reduce, if not completely avoid, network interference effects and, especially, reactive power with respect to the power supply network, particularly through suitable operation of the controllable rectifier device. This makes it possible to reduce, if not completely avoid, the effort required for the filter circuit and/or compensation circuit necessary in the state of the art. Overall, an advantage can also be achieved in terms of the overall efficiency of the electrically operable facility because, on the one hand, significantly less electrical power loss occurs by the use of the uncontrolled rectifier device compared to the controllable rectifier device, and, on the other hand, power loss occurring by using the filter circuit and/or the compensation circuit can be reduced, if not completely avoided. It proves advantageous that the DC converter has a significantly better efficiency compared to the aforementioned devices. Therefore, the invention can also achieve an improvement in the overall efficiency of the electrically operable facility.

The power supply network can be a power supply network that uses a single-phase or multi-phase AC voltage. Preferably, the power supply network uses a three-phase AC voltage. The AC voltage can have a frequency of about 50 Hz, or also 60 Hz. In principle, however, the AC voltage can also have another frequency, for example 400 Hz or the like. The AC voltage can be a low voltage according to Directive 2014/35/EU of the European Parliament and of the Council of 26 February 2014 on the harmonisation of the laws of the Member States relating to the making available on the market of electrical equipment designed for use within certain voltage limits (Low Voltage Directive), a medium voltage or the like. Generally, medium voltage is understood to be an electrical voltage that is greater than the voltage covered by the Low Voltage Directive, but less than or equal to about 52 kV. The power supply network provides the AC voltage at the facility connection through which the electrically operable facility is connected to the power supply network.

The at least one uncontrolled rectifier device can be designed as an electronic rectifier device and can have, for example, one or more diodes. The diodes can be connected, for example, in the form of a bridge circuit. Preferably, the diodes are semiconductor diodes. In principle, it is of course also possible to use thyristors at least partially, wherein, in this case, a firing angle for the thyristors is usually as close as possible to a zero crossing of the AC voltage. From the point of view of efficiency and effort in terms of control, however, the use of diodes is more convenient.

The controllable rectifier device can basically be formed by a circuitry comprising thyristors, which are controlled with respect to the power to be controlled with a corresponding firing angle in relation to their firing pulses. Here, too, a bridge circuit can basically be provided. In addition, it is of course possible that the controllable rectifier device has one or more grid inverters. The grid inverters can be operated using transistors as switching elements, wherein the transistors are operated in switching mode such as, for example, pulse width modulation (PWM). The transistors can be, for example, Insulated-Gate-Bipolar-Transistors (IGBT) or also field-effect transistors (FET), simple bipolar transistors, combinations thereof, or the like.

The structure and function as well as the control of the aforementioned rectifier devices are substantially known to those persons skilled in the art, which is why it is refrained from providing a detailed explanation in this disclosure. The DC connections of the rectifier devices are connected in parallel so that the rectifier devices can essentially jointly supply the at least one DC consumer with electrical energy for the intended operation. The AC connections of the rectifier devices, on the other hand, are connected to an individually assigned secondary winding of the at least one transformer. This allows the secondary voltages to be provided as needed by a respective design of the secondary windings. Here, it is possible that different secondary voltages may be provided for the at least one uncontrolled rectifier device and for the at least one controllable rectifier device. This makes it possible to optimize operating points of the respective rectifier devices. This allows achieving, for example, that the controllable rectifier device is operated in an operating mode in which at least partial reactive power compensation can be achieved. In the best case, overcompensation according to grid requirements may be possible. Grid inverters are particularly suitable for this purpose as a controllable rectifier device.

At the same time, the uncontrolled rectifier device allows achieving that, due to the control principle, only few grid interferences effects occur. This combination then allows the grid interference effects to be reduced to such an extent that a filter circuit or the compensation circuit, as necessary in the state of the art, in the state of the art can be omitted.

In order to compensate for voltage fluctuations of the first AC voltage of the power supply network during this operation, the at least one DC converter is provided. The DC converter, also called DC/DC converter, can be operated accordingly in this regard. Depending on an input DC voltage, which in this case corresponds to the rectifier voltage, a converter power can then be adjusted or regulated accordingly so that the at least one DC consumer can be supplied with the predetermined operating DC voltage and the required operating DC current necessary for the intended process. The specified operating DC voltage or the operating DC current may depend on the design of the at least one DC consumer, and if applicable, in the case of an electrolyzing plant with the electrically operable facility, on a connection of the electrolyzing cells. For example, electrolyzing cells can be connected at least partially in series or also partially in parallel. In particular, the electrolyzing cells can be arranged in a stack design in the manner of one or more cell stacks and electrically connected in series within the stack.

Overall, the invention makes it possible to reduce the effort for the electrically operable facility, not only the hardware effort, but especially also the maintenance effort, while, at the same time, improving the overall efficiency of the electrically operable facility.

The invention can of course be advantageously applied to electrolyzing plants. However, it is not limited to such applications. The invention may be of course also be applicable for other applications where a DC consumer is to be supplied with electrical energy, such as, for example, in a land-based power supply for ships, especially in a port, providing a DC power grid, but also in mobile applications, such as charging electrically powered vehicles, a mobile emergency power supply, and/or the like.

According to another exemplary embodiment, it is proposed that the transformer is configured to be infinitely variable. This allows achieving that a simple standard transformer without taps can be used. No tap changer needs to be provided, and, in particular, no control for any tap changer needs to be provided. As a result, the transformer can be realized very cost-effectively. At the same time, maintenance can also be reduced, as the maintenance effort for a transformer without a tap changer is comparatively low. Reliability can also be improved.

According to another exemplary embodiment, it is proposed that the at least two secondary windings are configured to provide two different secondary voltages. The secondary voltages can be chosen such to be adapted to the respective rectifier device. The secondary windings are designed accordingly so that the respective secondary voltage can be provided. Especially, it can be provided that an individual secondary winding with an individual secondary voltage can be provided for each of the rectifier devices. However, in an alternative exemplary embodiment, it can also be provided that a secondary winding supplies not only one single rectifier device, but also two rectifier devices jointly, if these are, for instance, substantially identically designed. For example, it may be possible that a secondary winding supplies two or more uncontrolled rectifier devices or two or more controllable rectifier devices.

It is further proposed that the at least two secondary windings are configured to be galvanically insulated from each other. This can achieve a simple parallel connection of the rectifier devices on the DC side. An electrical potential difference, which may be present between the first and second AC voltage connections due to the electrically coupled DC voltage connections of the rectifier devices, can be compensated by the galvanically insulated secondary windings.

According to another exemplary embodiment, it is proposed that the at least one controllable rectifier device has a rated power that corresponds to at most about 50%, preferably at most about 43%, particularly preferably at most about 35%, of a rated power of the at least one uncontrolled rectifier device. Applying the invention, it has been found that such a rated power for the controllable rectifier device is sufficient to adequately reduce or avoid compensation of network interferences effects or network disturbances with respect to the power supply network, such as reactive power or the like. At the same time, this power rating can achieve that the at least one controllable rectifier device can be dimensioned as small as possible so that the effects on the overall efficiency by the at least one uncontrolled rectifier device can be kept as low as possible. It has been shown that the at least one controllable rectifier device has a less favorable efficiency with respect to its functionality than the uncontrolled rectifier device.

According to yet another exemplary embodiment, it is proposed that the at least one controllable rectifier device has a rated power that corresponds to at most about 35%, preferably about 30%, of a rated power of the electrically operable facility. This can also keep low the impact on the efficiency of the electrically operable facility as a whole. By limiting the rated power of the at least one controllable rectifier device in relation to the rated power of the electrically operable facility, the impact on the overall efficiency of the electrically operable system can also be limited. In particular, it can be achieved that an unfavorable partial load operation for the at least one controllable rectifier device can be reduced or avoided. By choosing the appropriate rated power, a favorable overall efficiency can thus be achieved.

According to another exemplary embodiment, it is proposed that the electrically operable facility is configured without a filter circuit. As already explained above, the invention makes it possible to realize the electrically operable facility without a filter circuit or compensation circuit, or at least with a reduced filter circuit or a reduced compensation circuit. Through the operation of the at least one controllable rectifier device, it is possible, among others, to achieve reactive power compensation and/or power factor compensation, for example. The at least one controllable rectifier device is therefore especially designed with its rated power adapted to this task. Because the at least one controllable rectifier device is able to compensate for the required network interference effects at least partially, especially substantially completely, it is possible to reduce the filter circuit or the compensation circuit accordingly or even avoid it completely. The at least one controllable rectifier device therefore does not need to be dimensioned to meet the requirement of compensating for network interference effects.

According to another exemplary embodiment, it is proposed that the transformer has a separate individually assigned secondary winding for each rectifier device. This makes it possible to use different rectifier devices, for example, different controllable rectifier devices, different uncontrolled rectifier devices, and/or the like. This provides the possibility to further improve the function of the electrically operable facility as a whole. The rectifier devices do not need to have the same rated power. It can be provided that several uncontrolled rectifier devices and/or several controllable rectifier devices with different rated powers are combined with each other. The different rated powers may also require different secondary voltages of the respective secondary windings. This design makes it possible to achieve a corresponding precise adaptation. Especially, this can prove to be an advantage if the electrically operable facility can only be operated in partial load operation at times, for example, due to the electrical energy available via the power supply network. In this case, it is advantageous to completely deactivate one or more specific rectifier devices that are not needed in order to be able to realize the highest possible efficiency of the electrically operable facility as a whole, even in partial load operation.

According to yet another exemplary embodiment, it is proposed that, at least during normal operation, the at least one uncontrolled rectifier device and the at least one controllable rectifier device are operated at least partially simultaneously. The simultaneous operation of the rectifier devices makes it possible, on the one hand, to achieve a high power, especially, a high operating power, and, on the other hand, to realize sufficient compensation of network interference effects with respect to the power supply network. Of course, it can also be provided in principle that, in a specific operating mode, only the at least one uncontrolled or the at least one controllable rectifier device is operated. However, in order to be able to make optimal use of the advantage of the invention, the at least one uncontrolled rectifier device and the at least one controllable rectifier device should be operated in parallel, especially permanently simultaneously.

Advantages and effects connected with the electrically operable facility according to the invention naturally also apply equally to the electrolyzing plant equipped with the electrically operable facility according to the invention and to the method according to the invention, and vice versa. In this respect, method features can also be formulated as device features and vice versa.

The embodiments described below are exemplary embodiments of the invention. The features and combinations of features indicated above in the description, as well as the features and combinations of features mentioned in the following description of embodiments and/or shown alone in the figures, can be used not only in the combination indicated in each case, but also in other combinations. Thus, embodiments which are not explicitly shown and explained with regard to the figures, but which may arise from the explained embodiments and can be produced by separate combinations of features, are also included by the invention or are to be regarded as disclosed. The features, functions and/or effects illustrated by the exemplary embodiments may in themselves each represent individual features, functions and/or effects of the invention, which are to be considered independently of one another and which also further may form the invention independently of one another. Therefore, the exemplary embodiment should also include combinations other than those of the embodiments explained. In addition, the described embodiments may also be supplemented by further features, functions and/or effects of the invention already described.

The teaching of the present invention can be readily understood and at least some additional specific details will appear by considering the following detailed description of some exemplary embodiments in conjunction with the accompanying drawings. In the drawings, same reference characters correspond to same components and functions. In the drawings, it is shown:
FIG 1 shows in a schematic block circuit diagram representation an electrolyzing plant having an electrically operable facility that has an adjustable transformer, thyristor rectifiers and a filter circuit,
FIG 2 shows in a schematic block circuit diagram representation such as FIG 1 the electrolyzing plant having a first embodiment of an electrically operable facility with a non-adjustable transformer as well as a grid inverter operated in parallel with two diode rectifier devices, and DC converters, and
FIG 3 shows in a schematic block diagram representation such as FIG 1 the electrolyzing plant having a second embodiment of an electrically operable facility with two non-adjustable transformers as well as a grid inverter operated in parallel with one diode rectifier device and DC converters.

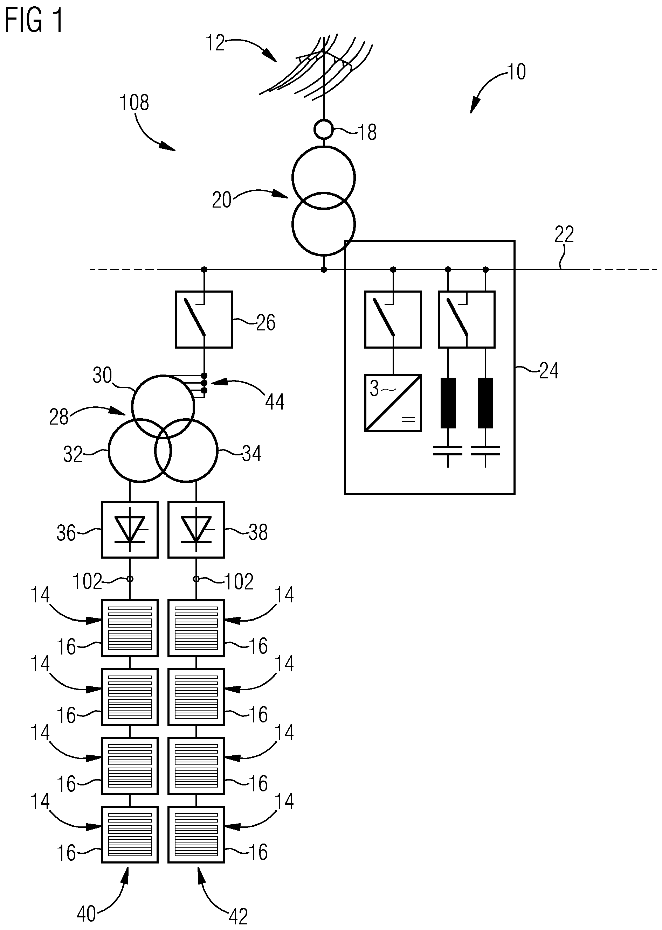

FIG 1 shows in a schematic block circuit diagram representation an electrolyzing plant 10 with a plurality of electrolyzing cells 14 and an electrically operable facility 108. In the present embodiment, the electrolyzing cells 14 serve to carry out water electrolysis by supplying water to the electrolyzing cells 14 and discharging electrolysis products, namely, hydrogen and oxygen, from the electrolyzing cells 14.

As can be seen from FIG 1, the electrolyzing cells 14 are arranged in respective cell stacks 16 and electrically connected in series. FIG 1 shows that the electrolyzing plant 10 has a first branch 40 and a second branch 42, with each of the two branches 40, 42 having four cell stacks 16, which in this embodiment are also connected in series. In the intended electrolyzing process, considering the rated conditions of the electrolyzing plant 10, the series-connected stacks 16 of the electrolyzing cells 14 of each branch 40, 42 are supplied with an electrolyzing voltage as operating DC voltage of about 700 volts. The electrolyzing voltage is a DC voltage. Accordingly, the electrolyzing cells 14 arranged in each of the branches 40, 42 are supplied with an electrolyzing current of about 8 kA in the present case.

FIG 1 does not show that the electrolyzing plant 10 has other devices and/or units that are necessary for the intended electrolyzing process, such as devices for supplying water and discharging the electrolysis products, additional sensors, a system control apparatus with which, among others, the devices of the electrolyzing plant 10 can be controlled to carry out the intended electrolyzing process.

In order to supply the electrolyzing cells 14 with an electrolyzing power as operating power for the intended electrolyzing process, the electrolyzing plant 10 has the electrically operable facility 108, which is explained below. The electrically operable facility 108 has, among others, an electrical facility connection 18 that serves to connect with an electrical power supply network 12. The power supply network 12 is a public power supply network 12 that uses a three-phase AC voltage as the first AC voltage. In the present embodiment, it is provided that the first AC voltage is in a range of about 50 kV. A grid frequency is about 50 Hz in the present embodiment.

A first transformer 20 of the electrically operable facility 108 is connected with its primary winding to the facility connection 18. A secondary winding of the first transformer 20 is connected to an intermediate voltage line 22 of the electrically operable facility 108. By means of the first transformer 20, an AC voltage is provided on the intermediate voltage line 22 in a range of about 20 kV to about 33 kV depending on its transformation ratio.

An AC power switch 26 of the electrically operable facility 108 is connected to the intermediate voltage line 22. Depending on its switching state, the AC power switch 26 provides an electrical connection from the intermediate voltage line 22 to a primary winding 30 of a second transformer 28 of the electrically operable facility 108. The primary winding 30 has some taps connected with a tap changer 44, which allows at least partially compensating variations of the first AC voltage of the power supply network 12. A corresponding control apparatus of the tap changer 44 is not shown.

For each of the branches 40, 42, the second transformer 28 has a respective secondary winding 32, 34. In the present embodiment, the secondary windings 32, 34 are galvanically insulated from each other.

An AC voltage side of a first thyristor rectifier device 36 of the electrically operable facility 108 is connected with the secondary winding 32. A DC voltage side of the first thyristor rectifier device 36 is connected to the series-connected stacks 16 of the electrolyzing cells 14 so that the first thyristor rectifier device 36 supplies the electrolysis cells 14 of the first branch 40 with the electrolyzing power, that is the electrolyzing voltage and the electrolyzing current. A corresponding design is provided for the second branch 42. Accordingly, an AC voltage side of a second thyristor rectifier device 38 of the electrically operable facility 108 is connected with the second secondary winding 34. A DC voltage side of the second thyristor rectifier device 38 is connected with the series-connected cell stacks 16 of the electrolyzing cells 14 so that the second thyristor rectifier device 38 supplies the electrolysis cells 14 of the second branch 42 with the electrolyzing power accordingly.

From FIG 1 it can also be derived that a filter and compensation circuit 24 of the electrically operable facility 108 is connected with the intermediate voltage line 22. With the filter and compensation circuit 24, network interference effects due to the operation of the thyristor rectifier devices 36, 38 can be compensated in particular to such an extent that operating requirements of the power supply network 12 can be met. The basic function of the filter and compensation circuit 24 and the thyristor rectifier devices 36, 38 as well as the resulting network-relevant effects in intended operation are known to the person skilled in the art, which is why it is refrained from providing detailed explanations in this regard.

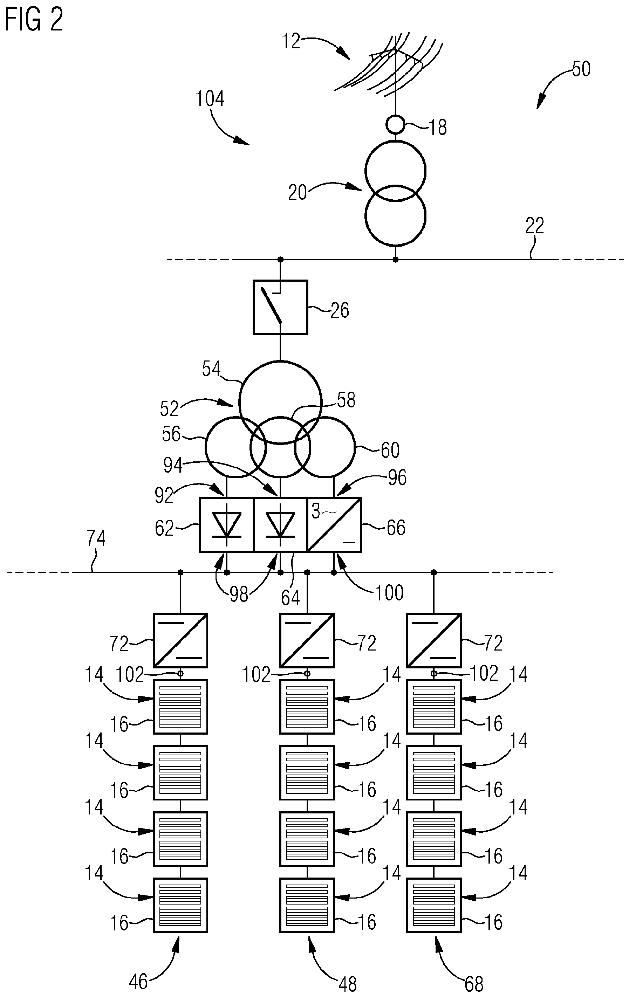

Although the electrolyzing plant 10 according to FIG 1 has proven itself in the intended operation, there is nevertheless a need to improve the efficiency of the electrolyzing plant 10, particularly with regard to maintenance, effort and effectiveness. This can be achieved with an electrolyzing plant 50 according to FIG 2. The electrolyzing plant 50 according to FIG 2 is based on the electrolyzing plant 10 according to FIG 1, which is why reference is made to the above explanations in this regard. In the following, only the differences between the electrolyzing plant 10 according to FIG 1 and the first embodiment according to FIG 2 are explained.

As can be seen from FIG 2, the electrolyzing plant 50 has an electrically operable facility 104, which is substantially designed in the same manner with regard to the connection with the power supply network 12 up to the AC power switch 26. This also applies, in principle, to the respective cell stacks 16, although in contrast to FIG 1, three branches 46, 48, 68 of cell stacks 16 of electrolyzing cells 14 are now provided. The cell stacks 16 and the electrolyzing cells 14 correspond to what has already been explained with regard to the previous embodiment of FIG 1. Here too, it is provided that each of the branches 46, 48, 68 has four cell stacks 16 of electrolyzing cells 14. Accordingly, the electrolyzing voltage for each branch 46, 48, 68 is also about 700 volts, wherein the electrolyzing current here is also about 8 kA for each of the branches 46, 48, 68.

Instead of the second transformer 28 in the first embodiment according to FIG 1, the second embodiment of the electrically operable facility 104 according to FIG 2 has a second transformer 52, whose primary winding 54 is connected to the AC power switch 26. The primary winding 54 is designed without taps connected with a tap changer in the present embodiment. In this embodiment, a voltage variation of the first AC voltage of the power supply network 12 can no longer be compensated by the transformer 52 of the electrically operable facility 104. For each of the branches 46, 48, 68, the second transformer 52 has a respective secondary winding 56, 58, 60, wherein the secondary windings 56, 58, 60 are also configured to be galvanically insulated from each other in the present embodiment.

An AC voltage connection 92 of a first diode rectifier device 62 of the electrically operable facility 104 is connected with the secondary winding 56. Similarly, an AC voltage connection 94 of a second diode rectifier device 64 of the electrically operable facility 104 is connected with the secondary winding 58. Finally, an AC voltage connection of a transistor-based grid inverter 66 of the electrically operable facility 104 is connected with the secondary winding 60. Each of the diode rectifier devices 62, 64 has a DC voltage connection 98 that is connected to a DC voltage line 74. Similarly, a DC voltage connection 100 of the grid inverter 66 is connected with the DC voltage line 74. A DC voltage is now provided on the DC voltage line 74, however, its voltage value can also vary depending on a variation of the first AC voltage of the power supply network 12.

In order to be able to supply the cell stacks 16 of the branches 46, 48, 68 with the electrolyzing power in a predetermined manner, the electrically operable facility 104, in contrast to the first embodiment according to FIG 1, additionally has DC converters 72. The DC converters 72 are designed as DC/DC converters in the present embodiment. Via the DC converters 72, the series-connected cell stacks 16 of the electrolyzing cells 14 of each of the branches 46, 48, 68 can be supplied with the electrolyzing power from the DC voltage line 74. By means of the DC converters 72, voltage variations of the DC voltage on the DC voltage line 74 can thus be compensated.

From FIG 2, it can be seen that in this embodiment, the second transformer 52 can be configured without taps or being continuously variable. At the same time, however, the filter and compensation circuit 24 can be omitted. This is possible because the grid inverter 66 is operated in such a way that occurring network interference effects, such as reactive power compensation, power factor and/or the like, can be compensated by appropriate control. For this purpose, it is provided that the grid inverter 66 is designed for a rated power that corresponds to about 30% of the rated power of the electrically operable facility 104 in the present embodiment. It has been found that such a design is sufficient. At the same time, this allows an overall favorable total efficiency of the electrically operable facility 104 compared to the electrically operable facility 108 according to FIG 1. At the same time, maintenance effort can also be reduced because, for example, the tap changer that is complex to maintain can be omitted. This also results in a corresponding advantage of the electrolyzing plant 50 compared to the electrolyzing plant 10.

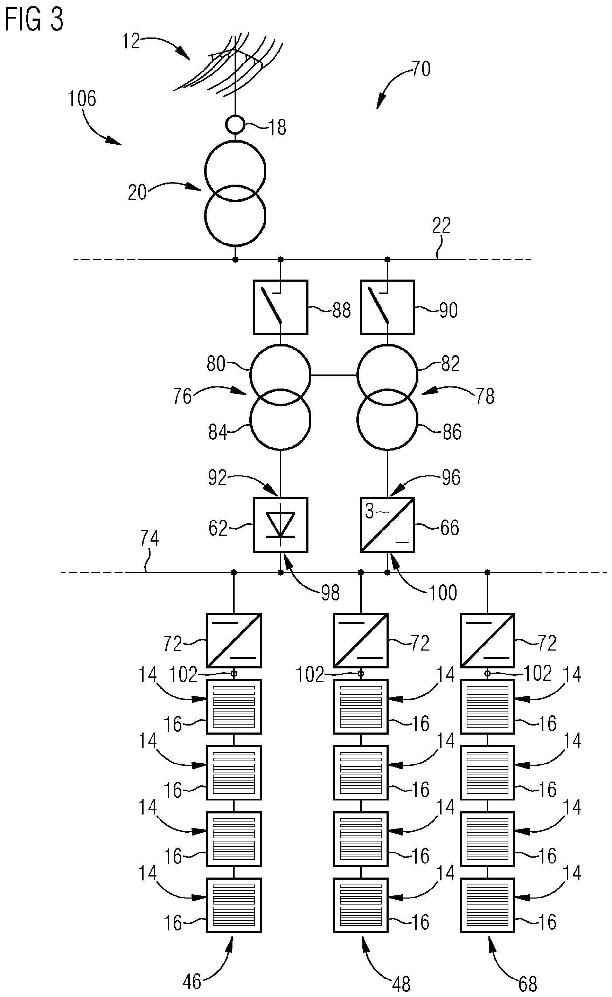

FIG 3 shows in a schematic block circuit diagram representation such as FIG 1 another embodiment of an electrolyzing plant 70, whose construction is substantially based on the construction of the electrolyzing plant 50 according to FIG 2, which is why it is additionally referred to the relevant explanations above. In the following, only the differences with regard to the embodiment of the electrolyzing plant 50 according to FIG 2 are detailed.

As can be seen from FIG 3, the electrolyzing plant 70 has an electrically operable facility 106. In the following, the differences of the electrically operable facility 106 with respect to the electrically operable system 104 are explained. In particular, instead of the second transformer 52 according to FIG 2, it is provided that the electrically operable facility 106 has two separate second transformers 76, 78. Respective primary windings 80, 82 of the second transformers 76, 78 are electrically connected to the intermediate voltage line 22 of the electrically operable facility 106 via respective AC power switches 88, 90 of the electrically operable facility 106, depending on their switching statuses. Each of the transformers 76, 78 has a respective secondary winding 84 or 86.

The AC voltage connection 92 of the diode rectifier 62 device of the electrically operable facility 106 is connected with the secondary winding 84. The AC voltage connection 96 of the grid inverter 66 of the electrically operable system facility 106 is connected with the secondary winding 86. The DC voltage connections 98, 100 are also electrically connected with the DC voltage line 74 of the electrically operable facility 106.

In this embodiment, only a single diode rectifier device, namely the diode rectifier device 62, is provided. Nevertheless, in this embodiment, both the second transformer 76 and the diode rectifier device 62 are configured for about twice the rated power as explained with regard to FIG 2. In alternative embodiments, this can be chosen differently. Here too, it is provided that the grid inverter 66 is designed for a rated power that corresponds to about 30 % of the total electrolyzing power in rated operation. The electrolyzing power in rated operation is the power for which maximum continuous electrolyzing operation is intended. The other components correspond to what has already been explained with regard to the previous figures, which is why reference is made to the corresponding relevant details above. The advantageous effect that a filter and compensation circuit and also a tap changer can be omitted can also be achieved with this embodiment. The functionality basically corresponds to what has already been detailed with regard to FIG 2.

Basically, the embodiments according to FIG 2 and FIG 3 can of course be combined with each other in any way and expanded accordingly, for example, if additional branches of cell stacks 16 of electrolyzing cells 14 are to be operated.

The grid inverter 66 is designed for three-phase operation and is especially configured to use IGBTs as switching elements in order to realize the desired energy conversion process. Basically, of course, the IGBTs can also be realized by other kind of transistors.

The embodiments serve exclusively only to explain the invention even further and shall not regarded as limiting its scope.

Even though the invention has been explained using an electrolyzing plant, its use is not limited to such application. Likewise, the invention can be used in other applications where a DC consumer is supposed to be supplied with electrical energy using a DC voltage, wherein the electrical energy is provided by an AC voltage network.

## Claims

1. An electrically operable facility (104, 106) comprising:
- at least one consumer connection (102) for connecting at least one DC consumer (14), wherein the electrically operable facility (104, 106) is configured to supply the at least one DC consumer (14) with an operating power in normal operation,
- an electrical facility connection (18) for connecting with an electrical power supply network (12) having a first AC voltage,
- at least one transformer (52, 76, 78) that has a primary winding (54, 80, 82) electrically coupled to the electrical facility connection (18), wherein the transformer (52, 76, 78) has at least two secondary windings (56, 58, 60, 84, 86),
- at least one uncontrolled rectifier device (62, 64) that has a first AC voltage connection (92, 94) electrically coupled to a first one of the at least two secondary windings (56, 58, 84) and a first DC voltage connection (98) for providing a rectifier voltage,
- at least one controllable rectifier device (66) that has a second AC voltage connection (96) electrically coupled to a second one of the at least two secondary windings (60, 86) and a second DC voltage connection (100) for providing the rectifier voltage, wherein the second DC voltage connection (100) is electrically coupled to the first DC voltage connection (98) in order to provide the operating power, and
- at least one DC converter (72) that has a rectifier voltage connection electrically coupled at least to the first and second DC voltage connections (98, 100), wherein the at least one DC converter (72) is electrically coupled at least to the at least one consumer connection (102) in order to provide a predetermined operating DC voltage for the at least one DC consumer (14).

2. The electrically operable facility according to claim 1, **characterized in that** the transformer (52, 76, 78) is configured to be infinitely variable.

3. The electrically operable facility according to any one of the preceding claims, **characterized in that** the at least two secondary windings (56, 58, 60, 84, 86) are configured to provide two different secondary voltages.

4. The electrically operable facility according to any one of the preceding claims, **characterized in that** the at least two secondary windings (56, 58, 60, 84, 86) are configured to be galvanically insulated from each other.

5. The electrically operable facility according to any one of the preceding claims, **characterized in that** the at least one controllable rectifier device (66) has a rated power that corresponds to at most 50%, preferably at most 43%, particularly preferably at most 35%, of a rated power of the at least one uncontrolled rectifier device (62, 64).

6. The electrically operable facility according to any one of the preceding claims, **characterized in that** the at least one controllable rectifier device (66) has a rated power that corresponds to at most 35%, preferably 30%, of a rated power of the electrically operable facility (104, 106).

7. The electrically operable facility according to any one of the preceding claims, **characterized in that** the electrically operable facility (104, 106) is configured without a filter circuit (24).

8. The electrically operable facility according to any one of the preceding claims, **characterized in that** the transformer (52, 76, 78) has a separate individually assigned secondary winding (56, 58, 60, 84, 86) for each rectifier device (62, 64, 66).

9. An electrolyzing plant (50, 70) with a plurality of electrolyzing cells (14), wherein the electrolyzing plant (50, 70) is configured to supply the electrolyzing cells (14) with an electrolyzing power in normal electrolyzing operation so that the electrolyzing cells (14) realize the desired electrolyzing process, wherein the electrolyzing plant (50, 70) has an electrically operable facility (50, 70) according to one of the preceding claims for supplying the electrolyzing cells (14) with the electrolyzing power, wherein at least one consumer connection (102) of the electrically operable facility (50, 70) is electrically coupled to at least a part of the electrolyzing cells (14) in order to provide a predetermined electrolyzing voltage for the electrolyzing cells (14).

10. A method for operating an electrically operable facility (104, 106) that has at least one consumer connection (102) for connecting at least one DC consumer (14), wherein the at least one DC consumer (14) is supplied with an operating power by the electrically operable facility (104, 106) in normal operation, wherein the electrically operable facility (104, 106) has an electrical facility connection (18) for connecting with an electrical power supply network (12) having a first AC voltage, wherein at least one transformer (52, 76, 78) of the electrically operable facility (104, 106) has a primary winding (54, 80, 82) electrically coupled to the facility connection (18), wherein the transformer (52, 76, 78) has at least two secondary windings (56, 58, 60, 84, 86), wherein at least one uncontrolled rectifier device (62, 64) of the electrically operable facility (104, 106), which has a first AC voltage connection (92, 94) electrically coupled to a first one of the at least two secondary windings (56, 58, 84) and a first DC voltage connection (98), provides a rectifier voltage, and at least one controllable rectifier device (66) of the electrically operable facility (104, 106), which has a second AC voltage connection (96) electrically coupled to a second one of the at least two secondary windings (60, 86) and a second DC voltage connection (100), provides the rectifier voltage, wherein the second DC voltage connection (100) is electrically coupled to the first DC voltage connection (98) in order to provide the operating power, and wherein at least one DC converter (72), which has a rectifier voltage connection electrically coupled at least to the first and second DC voltage connections (98, 100) and is electrically coupled to the at least one consumer connection (102), provides a predetermined operating DC voltage for the at least one DC consumer (14).

11. The method according to claim 10, **characterized in that**, at least during normal operation, the at least one uncontrolled rectifier device (62, 64) and the at least one controllable rectifier device (66) are operated at least partially simultaneously.
